# EUROPÄISCHE PATENTSCHRIFT

(11) **EP 0 497 953 B1**
(45) Veröffentlichungstag und Bekanntmachung des Hinweises auf die Patenterteilung: **28.02.1996**
(21) Anmeldenummer: 91915288.4
(22) Anmeldetag: 26.08.1991
(51) Int. Cl.: C10L 5/10, C10L 5/40, C10L 9/10

(54) **VERFAHREN ZUR HERSTELLUNG UND VERFESTIGUNG EINES BRENNSTOFFS UND ENTSPRECHENDER BRENNSTOFF**
PROCESS FOR PRODUCING AND COMPACTING A FUEL AND CORRESPONDING FUEL
PROCEDE DE PRODUCTION ET DE CONSOLIDATION D'UN COMBUSTIBLE ET COMBUSTIBLE AINSI OBTENU

(30) Priorität: 25.08.1990 DE 4026920
(43) Veröffentlichungstag der Anmeldung: 12.08.1992
(73) Patentinhaber: Hölter, Heinz, Dipl.-Ing., D-45964 Gladbeck (DE)
(72) Erfinder: Hölter, Heinz, Dipl.-Ing., D-45964 Gladbeck (DE)
(74) Vertreter: Spalthoff, Adolf, Dipl.-Ing.
(86) Internationale Anmeldenummer: EP9101619
(87) Internationale Veröffentlichungsnummer: WO9203522

(56) Entgegenhaltungen:
- EP-A- 0 271 628
- DE-A- 3 131 959
- DE-A- 3 440 612

## Beschreibung

Die Erfindung bezieht sich auf ein Verfahren zur Herstellung und Verfestigung eines Brennstoffs nach dem Oberbegriff des Patentanspruchs 1.

Es ist bekannt, daß Kohle und auch Müllrückstände mit Kalk gemischt werden, um eine SO2-bindende Eigenschaft zu erzielen, die beim Verbrennen dieser Kohle, insbesondere in Wirbelschichtfeuerungsanlagen, vorteilhaft ist.

Aus der DE-A-34 40 612 ist ein Verfahren zur Herstellung und Verfestigung eines Brennstoffs bekannt, bei dem dem herzustellenden Brennstoff ein Kalkanteil zugegeben wird, der, um sicherzustellen, daß nahezu die gesamte im Brennstoff vorhandene Schadstoffmenge bei der Verbrennung eingebunden wird, das 4- bis 8-fache der zur Einbindung des im Brennstoff enthaltenden Cl bzw. der bei der Verbrennung maximal freisetzbaren HCl bzw. H2SO4 stöchiometrisch erforderlichen Menge beträgt.

Aus der EP-A-271 628 ist ein Verfahren zur Herstellung eines Veredelungsprodukts bzw. eines Brennstoffs aus Klärschlämmen bekannt, bei dem dem Klärschlamm Flockungshilfsmittel und ein Kohlenstoffträger zugesetzt werden. Des weiteren können dem Klärschlamm Kalk und ggf. minderwertige Abfallstoffe zugesetzt werden. Bei dem bekannten Verfahren erfolgt die Zugabe des Flockungshilfsmittels zeitlich und räumlich getrennt von der Zugabe des wesentlichen Anteils des Kohlenstoffträgers, der dem Klärschlamm nach dessen Entwässerung in trockener Form zugegeben wird. Teilweise wird der Kohlenstoffträger in Form von Kohleschlamm dem Klärschlamm schon vor bzw. bei der Entwässerung zugegeben.

Ausgehend von dem vorstehend geschilderten Stand der Technik liegt der Erfindung die Aufgabe zugrunde, das gattungsgemäße Verfahren bzw. den gattungsgemäßen Brennstoff derart weiterzubilden, daß weitere Abfallstoffe verwendbar sind und bei gleich hoher bzw. noch erhöhter Schadstoffeinbindung weniger Kalk erforderlich ist.

Diese Aufgabe wird erfindungsgemäß durch die im kennzeichnenden Teil der Patentansprüche 1 und 2 angegebenen Merkmale gelöst. Durch die Verwendung von feuchter Schlammkohle aus der Flotationssektion einer Kohleaufbereitung wird zum einen der Reaktionsvorgang CaO-Ca(OH)2 ermöglicht bzw. erleichtert, was zu einer besseren Ausnutzung der Einbindefähigkeit des Kalkanteils führt. Darüber hinaus wird die vorstehend genannte Einbindefähigkeit des Kalks noch durch das Vorhandensein der aus der Flotationssektion einer Kohleaufbereitung stammenden Flockungsmittel gefördert. Insgesamt ergibt sich somit eine bessere Ausnutzung der Einbindungsfähigkeit des zur Schadstoffeinbindung erforderlichen Kalkanteils, wodurch eine erhebliche Reduzierung der dem Brennstoff beizugebenden Kalkmenge erzielt werden kann. Den einzelnen Substanzen aus aufbereiteten organischen Rückständen, z.B. aus Abfällen aus der Industrie und/oder aus Haushaltsmüll, aus Bleicherde und aus aufgeschlossener und aufbereiteter Kohle wird ungelöschter Kalk zugesetzt, wobei Schlammkohle verwendet wird, die genügend Feuchtigkeit besitzt, um den Reaktionsvorgang von CaO zu Ca(OH)2 zu ermöglichen.

Dies kann auch durch die Feuchte des organischen Mülls und/ oder der anderen Zuschlagstoffe gefördert werden. Die besonders günstigen Eigenschaften der Schlammkohle beruhen darauf, daß in der Schlammkohle noch Flockungsmittel aus der Flotation aus der Aufbereitung der Kohle vorhanden sind; überraschenderweise hat sich herausgestellt, daß die Löschung von Kalk im Beisein von Schlammkohle und anderen Substanzen in Verbindung mit den Flockungsmitteln mit dem Löschvorgang eine hervorragende Bindefähigkeit auf alle Zuschlagstoffe, die wunschgerecht zum organischen Brennstoff führen, erzeugt.

Dem Brennstoff wird des weiteren Bleicherde zugegeben, bei der es sich um ein industrielles Abfallprodukt handeln kann, für dessen Entsorgung ansonsten nicht unerhebliche Kosten auftreten würden.

## Patentansprüche

1. Verfahren zur Herstellung und Verfestigung eines Brennstoffs aus Schlammkohle, einem Müllanteil, der aus organischen Rückständen aus Industrie- und Haushaltsabfall besteht, und ungelöschtem Kalk, dadurch gekennzeichnet, daß Schlammkohle eingesetzt wird, die Flockungsmittel aus der Flotationssektion einer Kohleaufbereitung enthält, und daß als Industrieabfall Bleicherde zugegeben wird.

2. Brennstoff aus Schlammkohle, einem Müllanteil, der aus organischen Rückständen aus Industrie- und Haushaltsabfall besteht, und ungelöschtem Kalk, dadurch gekennzeichnet, daß die Schlammkohle Flockungsmittel aus der Flotationssektion einer Kohleaufbereitung enthält und daß der Industrieabfall zumindest teilweise Bleicherde ist.

## Claims

1. Process for the producing and fixing a fuel of coal sludge, a refuse part which consists of organic residues from industrial and household waste, and quick lime, characterised in that coal sludge which contains flocculation agent from the flotation section of a coal preparation process is used, and bleaching earth is added as industrial waste.

2. Fuel of coal sludge, a refuse part which consists of organic residues from industrial and household waste, and quick lime, characterised in that the coal sludge contains flocculation agent from the flotation stage of a coal preparation process, and in that the industrial waste is, at least partly, bleached earth.

## Revendications

1. Procédé de préparation et de consolidation d'un matériau combustible constitué de charbon de boue, de chaux vive et d'une fraction de déchets constituée de résidus organiques issus d'ordures ménagères et de rebuts industriels, caractérisé en ce qu'on utilise du charbon de boue qui contient un agent de floculation provenant de la section de flottation d'une installation de traitement du charbon, et en ce qu'on ajoute de la terre décolorante en guise de rebuts industriels.

2. Matériau combustible constitué de charbon de boue, de chaux vive et d'une fraction de déchets constituée de résidus organiques issus d'ordures ménagères et de rebuts industriels, caractérisé en ce que le charbon de boue contient un agent de floculation provenant de la section de flottation d'une installation de traitement du charbon, et en ce que les rebuts industriels sont, au moins en partie, de la terre décolorante.
